# EUROPEAN PATENT APPLICATION

(11) **EP 0 583 214 A1**
(43) Date of publication of application: **16.02.1994**
(21) Application number: 93630056.5
(22) Date of filing: 09.08.1993
(51) Int. Cl.: G09B 21/00, A61F 9/08, H04B 5/00, G08B 1/08

(54) **Audio landmark guidance system**

(30) Priority: 10.08.1992 US 926709
(71) Applicant: Wilson, Stanley, St. Charles, Missouri 63301 (US); Hawkins, Charles C., St. Charles, Missouri 63301 (US)
(72) Inventor: Wilson, Stanley, St. Charles, Missouri 63301 (US); Hawkins, Charles C., St. Charles, Missouri 63301 (US)
(74) Representative: Waxweiler, Jean

(57) **Abstract**

A directional system for instructing the invalid comprising a transmitter, the transmitter provided for locating upon any structure or furnishing a signal for broadcasting verbal messages over a receiver held by the invalid, or the like. The transmitter provides for continuous transmitting of a message, in signal form, which is picked up by the receiver, the signal being transmitted within the range of 100 Hz to 10 kHz, and with the receiver circuitry incorporating power supply, an antenna for pickup of the transmitted signal, amplifier means, filter means, and other electronic components for outputting of a audio message from its speaker, with the transmitter including circuitry incorporating memory means, for storage of message(s) to be selected and transmitted, a microprocessor for selecting the message to be transmitted, and circuitry for processing the message and transmission of the signal within the identified frequency range for pickup by the antenna of the receiver for delivery of the selected audio message.

## Description

### Background of the Invention

This invention relates generally to an instructional device, and more specifically pertains to a landmark guidance system that provides an audio message to the invalid to instruct as to their location, or provide further directions for movement.

Providing further assistance to facilitate the plight of the invalid, whether they be fully or partially sight impaired, mentally retarded, the elderly, the handicapped, or the cognitive impaired, has long been considered as desirable, but only in recent years have those responsible for enforcing regulations and other means for assisting the handicapped obtained the legislative enforcement to require that means be provided for affording total assistance to the handicapped, in their dealings with society. Thus, only during this generation have we seen enforcement of a requirement that various ramps be provided for the physically handicapped, particularly those confined to the wheelchair, or that elevators or other ramp means be provided within buildings, to ease their ability to move about, and in addition, it is slowly becoming a requirement that assistance be provided to other impaired, such as the blind, or partially blind, to provide them with guidance and direction in their movements.

Various prior patents disclose means for assisting the blind, such as can be seen in the United States patent to Osaka, No. 4,660,022, which shows a system for guiding the blind. This particular device, as disclosed therein, includes an electronic system for use in guiding the blind, which incorporates a receiver/sound generator, in addition to a receiver used in conjunction therewith. The user has a transmitter/control unit, such that when the user approaches a destination, his transmitter unit produces a control signal that actuates the sound generator of the receiver/sound generator installed in the facility, to produce an audio signal representing a voice, etc., so as to guide the user to a destination.

The patent to Trawick, III, U.S. No. 4,025, 922, discloses a traffic control system, and more specifically, as can be seen from reviewing this patent, the cane of a blind person incorporates an interrogating FM radio transmitter/receiving unit, which can be incorporated within the cane, or the like, with a responding FM radio receiver/transmitter unit operatively associated with a traffic light control circuit as at a street intersection. When the FM signal is modulated, by the interrogating unit, it provides a coded signal indicative of which direction the blind operator wishes to cross the intersection. As can be seen, the interrogating unit also produces an audio or mechanical output signal, when the encoded signal received from the responding unit corresponds to the coded signal it transmits under the control of the blind operator, with this output signal indicating that it is safe to cross the intersection at the desired location and the necessary direction. The disclosure of this device primarily, though, relates to traffic control, a signal used in conjunction therewith, for use for regulating the operations of a traffic light.

The United States patent to Greer, No. 4,350,969, discloses a vehicle identification and positioning signalling system in a public transportation arrangement. This particular device relates to the provision of a signal that is generated from, for example, a school bus, apparently operates off of the odometer of the vehicle, in order to provide a present position for locating of the vehicle on a scheduled route, such as when the vehicle approaches the home of a passenger, like a student, for pick up. A radio receiver at the home receives the transmitted signal indicating that the bus is approaching the home, and the student-passenger should get to the bus stop promptly, for pick up.

The patent to Boone, et al., U.S. No. 4,713,661, discloses a transportation vehicle location monitor generating an audible message. This particular device is for use in conjunction, once again, with a transportation vehicle, and incorporates a speech synthesizer for voice announcement of vehicle location by stop number. Apparently this type of device is used in conjunction with the bus systems, in order to announce the presence of a particular stop, as along the vehicular route.

The United States patent to Brubaker, No. 4,857,925, shows another form of route indicating signalling system for transport vehicles. The purpose of this particular device, as can be seen, is similar to that of the previously defined patent, for signalling the arrival of a transport, such as a bus, at various destinations.

The patent to Friedman, U.S. No. 4,935,907, shows an electronic homing system. This particular homing system is a little more complex than those as previously identified, since it not only produces and provides a series of processing modules placed at stationery locations, but there is an interexchange of signals between the modules, and the transmitting means, in the form of an omnidirectional sonic response signal, receiving coded request signals, in order to provide responses that are indicative of the distance between the mobil transmitting module and the receiving response modules.

The patent to Nastrom, U.S. No. 4,955,000, discloses an ultrasonic personnel location identification system. This particular device, as you can see from reviewing the patent, is to provide an identification system, based upon the operations of ultasonics, for locating personnel within a complex.

Finally, the United States patent to Fabiano, et al., No. 5,021,780, discloses a bus passenger alerting system which provides means for alerting passengers when a particular bus is approaching.

### Summary of the Invention

The essence of this invention is the provision of an audio landmark guidance system, particularly for use by the vision impaired, and those who also require some verbal guidance in their movements, and more specifically incorporates a very low frequency operating means of communication, to provide isolated instructional guidance to the persons carrying a cooperating receiving means, for accurately instructing regarding further movement.

More specifically, the functional operations of this current invention are intended to operate within the area of communications in which frequency control and regulation normally does not exist. This is in the range of from 100 Hz to 10 kHz, which, as is known, an area in which FCC regulation does not exist, and furthermore, is a seldom utilized frequency range. Characteristics of now existing signals in this particular region make it desirable to utilize these frequencies in a device such as that of this current invention, even though a few decades ago such signal ranges were considered of inutility. The current invention is interested in communications at a direct frequency of approximately 400 Hz, up to 2.8 kHz, more specifically, since this range is required for normal speech. If the waves within this range are propagated at the identified frequencies by electromagnetic means, it is possible to filter out the narrow band signals, namely, in the 60 Hz range, by use of notch filters, and the like. The energy of the natural signals is spread out across the entire 10 kHz region. The invention of the current device overcomes these extremely low level signals by two methods, first by just overpowering the unwanted signals, and secondly, the transmission means of the current invention generates at such a high powered magnetic field in the near short range, that it is effective in elminating interference at these frequency levels. Furthermore, the current invention incorporates circuitry that utilizes the narrow band-pass filters to capture approximately 20% of the spectrum of frequency of interest to provide functionality to the operations of this product. This invention utilizes direct transmission means since it requires less complex equipment than normal radio techniques. In addition, this device by the control of the magnetic field generated in the near range can control very accurately the useful range of the receiver means.

The electronic physical embodiment of this current invention simply utilizes a transmission means, that may be located at any particular structure, such as at a building, as at its entrance, or for identification of particular facilities or rooms within the building, or for indicating the particular floors at which the user arrives either by use of the stairs, or an elevator, or the transmission means of this invention could be used and permanently installed at many other facilities around town, such as bus stops, street crossings, church locations, office building entrances, and many, many other installations.

The electronics of this system are relatively compact. It basically consists of two component packages, a transmitter and a receiver. The transmitter, which is relatively small, is used to store messages upon a digital chip, and which are regulated by microprocessor, for continuous transmission of signals. The message will be continually broadcast so long as the unit is maintained "on." After the message has been stored, it can be used indefinitely or it may be changed as required. The power for the transmitter may be supplied by battery, by vehicle power, by AC/DC power, or even by solar power.

The receiver for this particular system is about the side of a small hand calculator, and includes a speaker that literally tells the user the recorded message. This allows the system to give exact information, i.e., the name of a store, a particular bus stop or a bus route, and other information, as previously explained. A reset button lets the user stop the speaker at any particular time, of their selection. The power within the receiver will preferably be supplied by a battery contained within the unit, in order to enhance its portability.

The specific details of the circuitry for the transmitter and the receiver will be subsequently analyzed, but, particularly includes cooperating components that allow the operations of this device within the frequency range as previously explained, which is generally within the low frequency parameters.

Variations upon the application and usage of this device, or the component arrangement of its circuitry, may occur to those skilled in the art upon reviewing the summary of this invention as provided herein, and upon undertaking a study of the description of its preferred embodiments, in view of the drawings.

### Brief Description of the Drawings

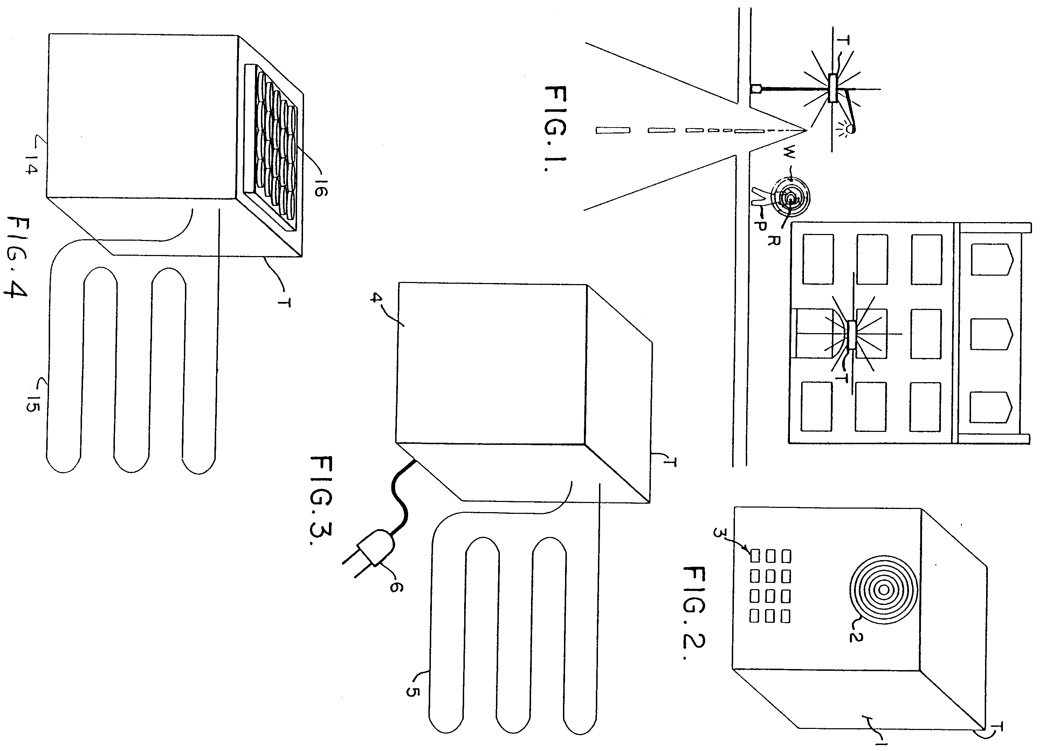

In referring to the drawings, Fig. 1 is a schematic view of the receiver and transmission means of this invention, located at particular structural installations, and showing how an isolated voice message may be provided only within the vicinity of the person carrying the receiving means;
Fig. 2 provides a perspective view of a transmitter means for this particular invention;
Fig. 3 provides a further perspective view of another transmitter means for this particular invention;
Fig. 3a is a schematic of the interior of a multimessage transmitter;
Fig. 4 provides a perspective view of a further modification to the transmitter means of this invention, disclosing one that may be solar powered; and,
Fig. 5 provides a perspective view of a receiver means of this particular invention.
Fig. 6 is a circuit diagram of the receiver means.
Fig. 7 is a voice frequency of a transmitted signal;
Fig. 8 is a block circuit of the transmitter of the present invention;
Fig. 9 is a block diagram of the microprocessor;
Fig. 10 is a block diagram of the memory of the microprocessor;
Fig. 11 is a diagram of the stored codes component;
Fig. 12 is block diagram of the digital recorder circuitry.

### Description of the Preferred Embodiment

In referring drawings, and in particular Fig. 1, the installation of the audio landmark guidance system of this invention is disclosed. As can be seen, a region along a roadway having a building, as noted, may include particular installations where it is desirable to provide voice messages transmitted to the visually impaired, or handicapped, such as the person P, as noted. In this particular instance, a transmitter means T may be located upon a lightpost, as at the intersection of a pair of roadways, or a transmitter means T may be located at the entrance to a building, to provide an identifying message to the person, of his/her proximity. The receiver means R may be carried or worn by the person, and transmit a short range signal, such as indicated by the wave lines W, within the vicinity of the person, to furnish verbal information and instructions relating to the structures identified by the transmitter means T.

Fig. 2 provides a perspective view of a transmitter means T, of the type that may be located upon a transit vehicle, such as a public service bus, or the like, and which continuously transmits a message, for reception by the receiver, to provide identification to its wearer as to the type and route of the bus, subway, or the like, to be entered. The transmitter means includes a housing as at 1, incorporates its electronic components therein, to be subsequently described, further has a speaker 2 for transmission of the short wave signal, and furthermore, the transmitter may include a key pad, as at 3, to allow the driver to change the recorded message, to another, all of which messages may be recorded electronically upon the memory of a microprocessor, integrally contained within the circuitry of the transmitter means.

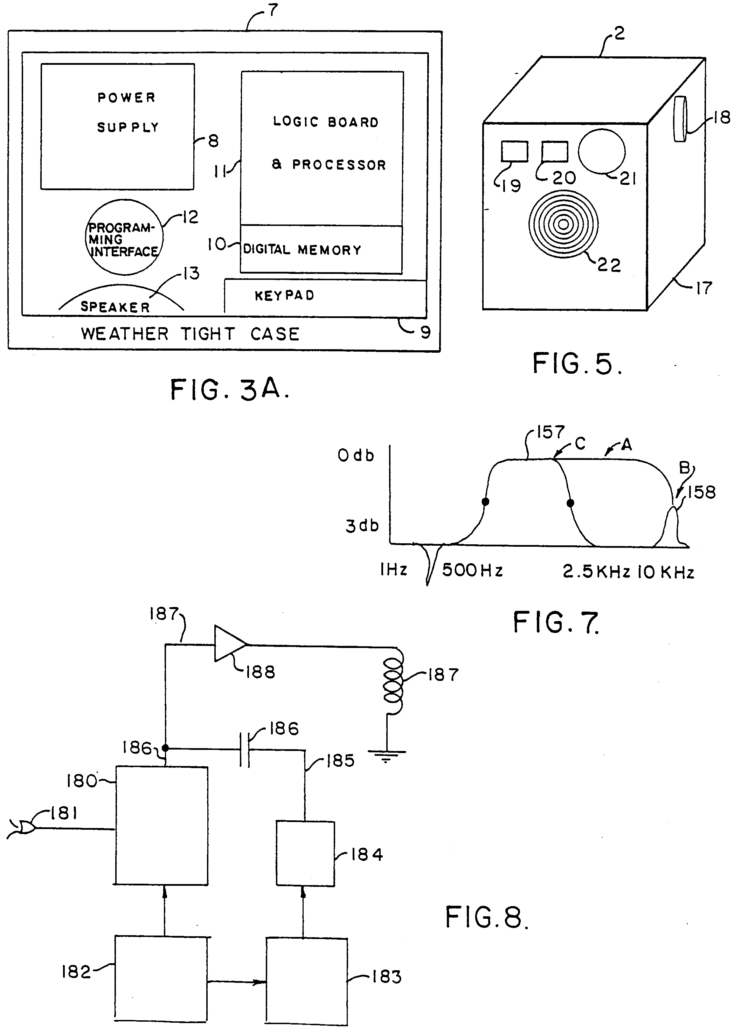

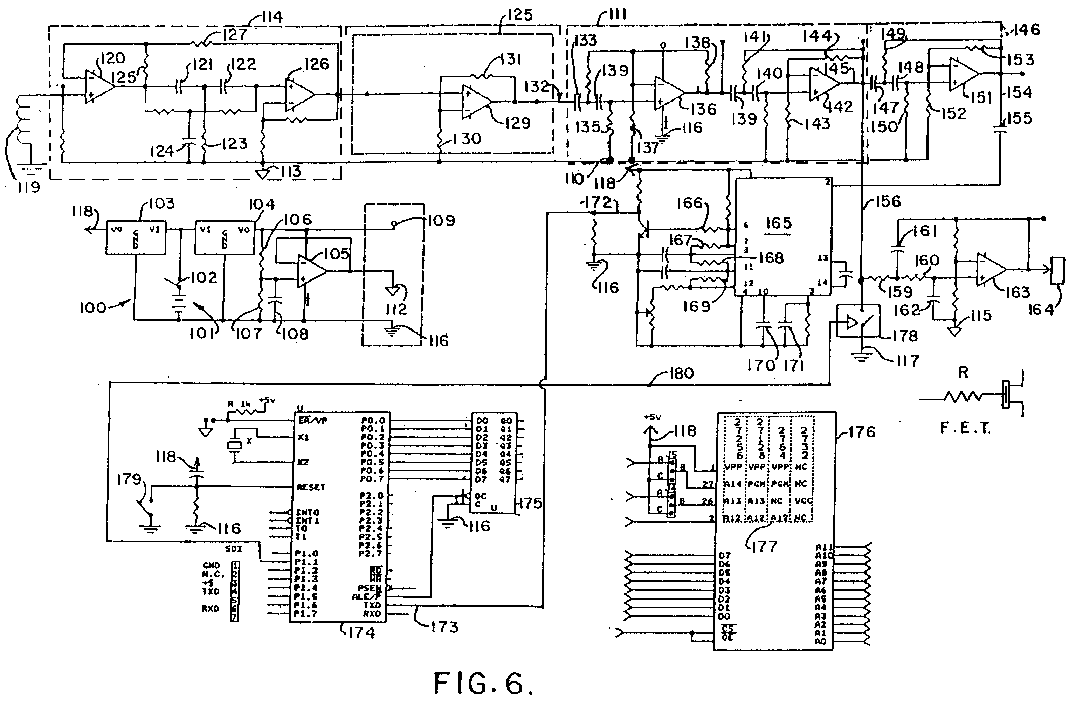

Fig. 3 provides a perspective view of another transmitter T, and in this particular instance further includes a housing 4, but instead of a speaker for transmission of a signal may utilize an antenna, as at 5, which may preferably be of the current type loop antenna, for transmission of the signal at low frequencies to any nearby receiver means. The transmitter means T may include an electrical plug-in device, as at 6, to obtain its useful power supply.

While the previously described transmitter of Fig. 3 may be for use, as for example, in providing a single message transmission, it is likely that the transmitter of this invention may incorporate circuitry for furnishing multimessages, at the selection of the operator. For example, as explained in Fig. 2, there may be provided a key pad for inputting of particular digital signals for determination of which message is to be transmitted. As can be seen in Fig. 3A, which provides a schematic of the interior of a multimessage transmitter means, it also includes in a housing 7, having a power supply 8 provided therein. A key pad 9 may be useful for inputting selectional signal to a digital memory 10 for determining which message is selected for transmission, which message is then processed by the logic board and processor 11, which may provide for a transmission of the digital signal representative of the message to the programming interface 12, for provision of a signal to the speaker 13, which may transmit the selected signal from the speaker 13 to the receiver means R, as previously explained. Obviously, the housing 7 for the transmitter means, which may be located exteriorly, may be desirably be formed as a weathertight case, for protection of the electronic components therein.

Fig. 4 discloses a further modification or embodiment for the transmitter means T of this invention, which may include its housing 14, having its current type loop antenna 15 electrically associated therewith, for transmission of any signal generated within the transmitter, and for reception by a proximity receiver means. In this particular instance, as can be seen, the electrical power for operations of the transmitter means may be attained from a solar cell pack 16, as noted being mounted upon the upper surface of the housing 14, and clear to view of any solar radiation directed from above.

The receiver means of this invention is disclosed in Fig. 5, and also comprises what preferably will be a small compact housing 17, preferably one that may be easily held by the hand, located within the pocket, clipped on to the vest pocket of the user, and generally be of a small hand calculator or portable radio size as readily known and available. Particular instrumentation may be provided upon the receiver, such as an ear piece jack 18 that may connect by wiring to a hearing aid, to assist the hearing impaired, and in addition, may include and on/off switch 19 in addition to a repeat button 20, in the event that the received signal has been broadcast, its predetermined number of times, but that the user of the receiver means has not been cognitive enough to attain an understanding, or an accurate description of the location, and seeks a repeat of the message or messages transmitted by the proximate transmitter means. In addition, a volume control 21 may be provided, and can be easily manipulated by the user, and furthermore, the speaker 22 will be conveniently located to provide unmuffled broadcasting of the verbal message, to the benefit of the user.

A more detailed understanding of the structure, application, and functionality of this current invention requires a more detailed analysis of its circuitry.

In referring to Fig. 6, the receiver means or mechanism that is generally worn by the handicapped person, whether it be the blind, retarded, etc., has its circuit diagram therein. This particular circuitry, as can be seen, includes, initially, its own inherent power supply, as can be seen at 100. This power supply, as noted, is generally used to produce a power output, generally in the range of 3 volts DC, as for use for the general power applied to regulate the various circuitry of the receiver, at one output, while the opposite output of the power supply, after it is regulated, produces a 5 volt DC power, for use for energizing the digital components of this receiver circuitry. Initially, a 9 volt battery, generally of the AAA type, is applied at 101. The circuitry also includes a switch 102, and which can be manipulated by the wearer, so as to render it inoperative and inactive, when the user knows that he does not have usage for the receiver at the moment. But, when the user, for example, enters a bus, or is approaching a building, and is in need of further instruction, at this time, he/she can simply turn or initiate the switch 102 into the "on" position, to activate the receiver. The circuit line from the switch connects with a pair of voltage dividers, as can be seen at 103 and 104. These voltage dividers are used for the following purpose. Voltage divider 103 takes the 9 volts from the battery and divides the voltage down to an approximate 5 volts DC, for use for digital power applications, as can be noted. The voltage divider 104 reduces the 9 volts from the battery down to 6 volts, which is subsequently processed as follows. The six volts are conducted to the operational amplifier 105, which is in effect functioning as a voltage divider, and converts the output voltage to a 3 volts DC, as can be noted. In conjunction with the amplifier 105 are the resistors 106 and 107, with the resistor 106 comprising a 100 kHz's resistor, and with 107 comprising the same. These resistors actually divide the output voltage of 6 DC, from the divider 104, and pass it through the amplifier 105, to amplify it so that the 3 volts DC can function as a linear reference for the operating components of the receiver. The capacitor 108 is provided for filtering out any noise that may be outputted from the divider 104. As can be seen, the VCC output from the divider 104, in conjunction with the amplifier 105, produces a 6 volt DC charge. This output is noted at 109. And, as can be seen throughout the circuitry of this device, this voltage is inputted to the circuitry at any position where the VCC input is noted, as for example at 110 into the band pass filter circuitry 111. The voltage output in the range of 3 volts DC, as at 112, is conducted to the various inputs for the circuitry of the receiver requiring such voltage, as for example, at input 113 of the notch filter 114 of the receiver circuitry. In addition, the 3 volts DC are also inputted into the lead 115 of the audio output circuitry, which will be subsequently described. Furthermore, as can be seen, the grounding circuit 116 of the power circuitry is grounded throughout the circuitry of the receiver, as shown. Furthermore, the microcontroller for the receiver, which is noted within block diagram 117, also has its grounded contacts 116, as can be noted.

As previously stated, the voltage divider 103 provides for an output of 5 volts DC. This particular voltage is conducted throughout the receiver circuitry, by way of its lead 118, to the various connecting points 118, as noted throughout the receiver circuitry, including within the microprocessor 117. The foregoing provides an analysis of the power circuitry for this device, and how the various divided voltages are supplied through the receiver circuitry, to provide for its charging and operation.

As can be noted, an antenna 119, and which is embodied within the receiver housing, receives the transmitted signal from the type of transmitter, which may be at a variety of locations, as previously described in this application. The antenna signal is then conducted to a twin bridged tee notch filter, as noted at 114, and in this circuitry the signal is processed, so that the various interfering signals that may have been conducted with the transmitted wave, can be eliminated, allowing for only the usable audio signal to remain, for further processing and transmission. This notch filter 114 is of the type that is available from many sources, but may specifically be obtained from a company like CTS, located at Lafayette, Indiana. In any event, the filter simply takes the inputted wave form from the antenna, with the amplifier 120 amplifying the signal, the amplified signals conducted along the circuit line to the filtering portion of the device, which includes a bridged tee circuitry, including the combination of capacitors 121 and 122, in addition to the resistor 123 and capacitor 124. This circuitry receives the signal from the amplifier 20, and its output has been controlled by the resistor 125 with the bridged tee filter removing all of the unwanted components of the wave form to provide for an output of only that audio signal desired to be processed and outputted by this receiver. The output from the tee is transmitted to another amplifier 126, with a feedback resistor 127 controlling its gain, and with the output from the amplifier 126 being transmitted to the amplifier circuitry 128, and this sets the amplified gain of the processed audio signal, for appropriate usage by the receiver, as to be described. Within this circuitry, is included the amplifier 129, which amplifies the signal, the resistor 130 sets the bias level on the amplifier, and with the resistor 131 establishing the gain of the amplifier, during its operations. Thus, an amplified audio signal is then transmitted over the circuit line 132, as noted. This outputted signal is conducted to the band pass amplifier 111, as previously explained. The purpose of the band pass amplifier is to filter out all unwanted aspects of the audio signal, except for the recovered voice portion of the transmitted signal from the transmitter. This band pass amplifier is generally formed of shelf components, including a variety of transistors that may be obtained from National Semiconductor, and generally functions for the purpose of filtering out and clarifying the voice component of any signal. The signal conducted over the circuit line 132 passes through the capacitors 133 and 134 and the resistor 135, which establish the frequency response of the input stage of the frequency amplifier 136. The two resistors 137 and 138 establish the gain of the signal as it passes through the amplifier 136. The pair of capacitors 139 and 140, in combination with the resistor 141, establish the frequency response of the second stage amplifier 142. The resistance 143 and the resistor 144 set the gain for the amplifier 142. Finally, the amplified audio signal, or voice signal, is conducted over the circuit line 145, and outputted to the band pass filtering device 146, as noted, where the data signal is amplified by this circuitry.

It might be stated at this stage, the band pass filter 146 is receiving the filtered signal originally entering the receiver from the antenna, and which, as previously explained, includes a series of unessential wave interferring information, such as from lights, radios, fluorescent lights, etc., which need to be removed from the transmitted wave form, and at this stage of the band pass filter 146, what remains and has been filtered free of the interference, is the voice signal, and the data signal, received from the previously identified transmission means. Hence, at the band pass filter 146, the voice signal and the data signals are separated, for separate processing. In the band pass filter 146, the signal enters along circuit line 145, and separates these two signals. Typically, within this application, the voice signal will be within the range of 500 Hz to 3 kHz, while the data signal may be in the range of 9 to 10 kHz. Thus, the combination of the capacitors 147 and 148 in combination with the resistances 149 and 150 determine or filter out the resistance component of the signal, and allow only the data wave form frequency to pass, which is further processed by the amplifier 151, and with the resistors 152 and 153 controlling the gain of the amplifier 151, to provide an output of a data signal that is approximately within the range of 8 to 9 kHz. This signal is conducted over the circuit line 154. The capacitor 155 simply functions as an isolator from the digital circuitry of the device. As can be seen, the combined signals are conducted over the circuit line 145, and through the circuit line 156, to the audio output of the receiver. On the other hand, the data signal alone is conducted over the circuit line 154, to the digital circuitry of the device.

As might be noted, as can be seen in Fig. 7, the voice frequency of the transmitted signal, as can be seen from the wave form as noted at 157, is between the 500 Hz to the 2.5 kHz range, whereas the data signal that is conducted over the circuit line 154, as can be noted at 158, is of substantially smaller frequency, and has little interference upon the wave form of the voice transmitted signal to the audio output.

Nevertheless, the signal transmitted over the circuit line 156 is conducted to the filtering circuitry, as can be noted at the resistors 159 and 160, in combination with the capacitors 161 and 162, which are provided to filter out any residual data signal that remains with the audio signal. Then, the remaining audio signal is amplified, by means of the amplifier 163, and outputted through a speaker, as noted at 164, and this is the voice signal heard by the wearer of the device, during its usage and application.

The processed data signal is conducted, as previously explained, over the circuit line 154, to the data processor 165. This particular component is an Exar Model No. 2211 integrated circuit, available from Exar Corporation of San Jose, California. This processor 165 then converts the data audio signal into digital signals, and conducts them over various circuit lines for further processing. Essentially, the various circuitry in the form of the resistors 166 through 169, in addition to the capacitors 170 and 171, effectively convert the audio data signal into digital signals, for outputting along the circuit line 172. The signals are transmitted down to the input 173 of the microcontroller 174. This particular microcontroller is available from Intel Corporation, of San Jose, California, under Model No. 8051. The purpose of this particular microprocessor, within the circuitry, is as follows. Initially, the microprocessor is designed to prevent the transmission from the audio output of the receiver of repeat messages. Secondly, the controller can be used to determine the language of the message to be outputted from the audio output. In other words, if the signal to the antenna 119 is, for example, in Spanish, and it is desired to have only a Spanish phrase outputted by the audio output, then this microcompressor 174 can be set to allow only a particular translated message to be transmitted from the speaker 164, in that language desired. The reason for this, for example, is that a handicapped person may be traveling in a foreign country, where these transmitters are present, but set in a different language, or in the alternative, various public-like facilities now require multilanguage transmissions, such as particular government buildings, for example, in Southern California, or public facilities such as Disneyland or Disneyworld, or at locations such as in Southern Florida, require that foreign language transmissions be provided upon various public announcing systems, such as by way of the transmitter of this particular invention. This microcontroller 174 can be set to provide for the transmission of select languages, and only that language, if it becomes necessary.

The microprocessor 174 processes the inputted data signal. The data address decoder 175 provides for the transmission and addressing of data that may be stored in memory, in order to attain access to it, and to provide for its transmission. This data addressor 175 is available from Texas Instruments, of Dallas, Texas, under Model No. 74 8CT 373. The data address decoder 175 is coupled by its various pins, as numbered, to the memory 176, which stores the various messages that are normally transmitted by the transmission means, so that once a particular message has been transmitted, the memory then determines if a particular message has been once received, and if so, instructs the microprocessor to prohibit the retransmission of that particular message. These messages may be prerecorded and prestored in the memory, as within its memory storage means 177. The various pin connections as numbered within this figure interconnect between the memory, and the data address decoder, in addition to the microcontroller 174. As a result of the operations of the microcontroller 174, in combination with its address decoder and memory, a signal is outputted from the microcontroller, as for example over pin 2, to a switch means 178, such that when that switch means is opened, as noted, the audio portion of the signal being transmitted over the circuit line 156 is allowed to be conducted through the audio filter, and transmitted through the speaker 164. This message will be repeated, for each time it is received, from the transmission means, unless the microcontroller 174 initiates a closure of the switch 178, at which time, this precludes any further passage of the transmitted voice signal to the receiver 164. On the other hand, should the user of the device wish to have a repeat of the transmitted message, he/she may simply press a mechanical switch, on the receiver, such as noted at 179, and this provides for a resetting, in the microcontroller, causing an opening of the switch 178, which allows the passage and repeat of the message again. Actually, the message as repeated, this time, comes from the memory 177, where it has been previously stored, and it is this message from memory that is conducted over the circuit line 180, and upon closure of the switch 178, allows the message to be repeated by outputting through the speaker 164. Actually, the memory 177 has a number that records when a particular message has been transmitted, and when it is desired to repeat a just previously heard message, and the reset button 179 is closed, it is that number from memory which is transmitted to open the switch 178, and allow that message to be repeated, once again, through the speaker 164.

The switch 178 is a field effect transistor type switch, as can be noted, and which is sensitive to opening and closing depending upon the signal transmitted over the circuit line 180.

The direct frequency transmitter, of the type as previously explained, that may be mounted upon a building, on a bus stop standard, within a building, or any of a variety of other locations, is generally disclosed in block circuitry form in Fig. 8. As can be seen, the transmitter includes a variety of components, generally for the purpose of storing of a variety of messages, and which may be continuously transmitted, or through the transmission of a signal, that is picked up by the proximate receiver, as when the wearer comes into proximity with the transmitter while functioning. As noted, the transmitter includes a digital recorder, as noted at 180, and the digital recorder is designed to record the variety of messages, or a single message, as may be desired from its output. The digital recorder will have the various messages transmitted thereto by means of the microphone 181. On the other hand, it is just as likely that various messages can be inputted to the transmitter by means of computer, or from other entering sources. The digital recorder stores the messages, and prepares them for transmission through the transmitter. The microprocessor 182 which connects with the digital recorder, determines how ofter a particular message will be transmitted, and the stored code component 183 applies a numbering system to the messages, so as to provide for means for determining which and when a particular message is to be transmitted. The encoder 184 provides for the conversion of the stored message into an audio frequency kHz range, for transmission over the circuit line 185, through the capacitor 186 where the signal joins with the message transmitted from the digital recorder. At this point, it must be stated that the signal conducted from the audio frequency encoder is the very low frequency data signal, in the 8 to 9 kHz range, whereas the digital recorder upon transmitting its converted message, is in the audio frequency range of 500 Hz to 2.5 kHz. This particular signal from the digital recorder is transmitted over the circuit line 186, joins with the data signal, they are conducted over the circuit line 187, to the amplifier 188, where the signal is amplified, and passes through the inductor of the antenna 189 for transmission of a signal that is then picked up by the receiver, and processed, in the manner as previousy explained. Thus, the transmitter conducts a signal alone, and not a voice message, as may be done by some prior art, as previously reviewed.

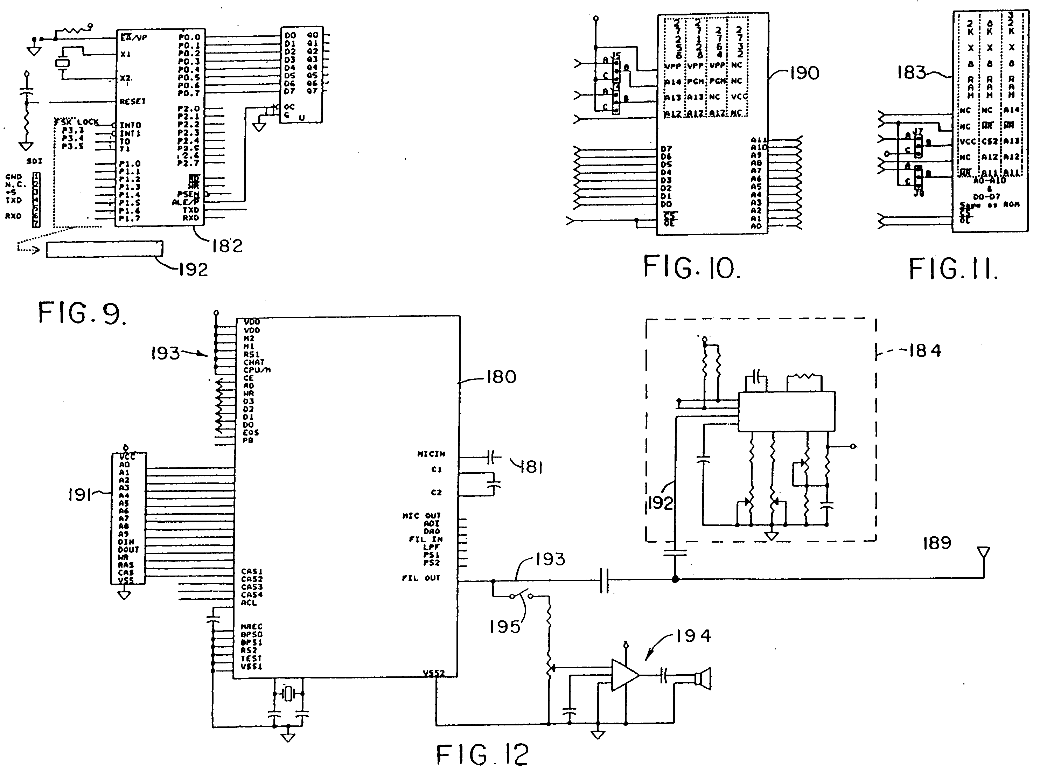

The more specific circuitry for the various components of the transmitter, as previously explained in Fig. 8, are shown in Figs. 9 through 12. As disclosed in Fig. 9, the microprocessor 182, as previously explained, is shown. The various pinned connections from the microprocessor 182, in Fig. 9, connect with the corresponding pins disclosed in the stored codes component, as disclosed in Fig. 11, and which further connect with the memory 190, as disclosed in Fig. 10, and which memory may be contained either within the stored codes 183, or in the microprocessor 182, as can be understood. But, as noted, the pinned connections between these components can be readily observed, and where they interconnect together during their assembly and functioning. The memory 190 is available from Intel Corporation, of San Jose, California, under the various model numbers as noted, as for example, for one memory component, as No. 2732, etc. The combination of the components in Figs. 9 through 11, in cooperation, initially provide the number that is given to the message being transmitted, it determines the frequency at which the message shall be transmitted, and likewise, as previously explained, determines in what language the message shall be received and transmitted over the speaker. The combination of these components is what establishes the data signal that is transmitted by the transmitter, in combination with the audio frequency signal, as previously described, and as can be subsequently explained herein. For example, Fig. 12 discloses the digital recorder 180, which, as previously explained, allows for the various messges that may be inputted to the digital recorder, as through the microphone 181. The messages, as inputted, are stored within the memory 191 of the microprocessor, and since the microprocessor 182 will already have converted the messages from the audio to the digital phase, the digitized message is then stored within the memory 191. But, as previously explained, it is possible that a computer may be used for inputting, as through its keyboard, as shown at 192, a message into the microprocessor 182, and any inputted message, by that method, is transmitted through the series of corresponding pins, as seen at 193, into the digital recorder 180, for digitizing, and storage. The encoder 184 receives its signal along the TDX line from the microprocessor 182, as noted, and this signal is processed by the encoder, that outputs a data signal, as previously explained, over its circuit line 192, which signal is mixed with the audio signal and conducted over circuit line 193 deriving from the digital recorder, and representative of the message being transmitted, where the two are mixed and conducted to the conductor antenna 189, for transmission, as previously explained. This is the signal which is transmitted a short distance to the receiver, and processed therein, as previously reviewed.

Further circuitry provided within this Fig. 12, includes circuitry providing for a service man to verify recorded messages within the digital recorder, and this circuitry is disclosed at 194. The service man need only simply close the switch 195, and the speaker transmits an audio message(s) as recorded in the digital recorder. This is just a verification for service purposes, and to let the service man know that the proper message has been stored within the digital recorder.

Variations or modifications to the subject matter of this invention may occur to those skilled in the art upon reviewing the subject matter as described and disclosed herein. Such variations or modifications, if within the spirit of this invention, are intended to be encompassed within the scope of any claims to patent protection issuing upon this development. The description of the preferred embodiment set forth herein, as shown in the drawings, is provided for illustrative purposes only.

## Claims

1. A directional system for instructing the invalid comprising a transmission means, said transmission means provided for locating upon any structure the location of which is to be identified or to furnish directions, a receiver means, said receiver means provided for being carried by an invalid, the transmission means provided for continuously transmitting a message, said transmission means capable of transmitting and said receiver means capable of receiving the message in the 100 Hz to 10 kHz range, said receiver means including circuitry incorporating a power supply, said receiver means having an antenna for reception of the transmitted signals, amplifier means for amplifying the received signal, filter means for filtering out the interference carried by the transmitted signal and for separating out a voice representative signal, speaker means provided within the circuitry of the receiver means for broadcasting the transmitted message, said transmission means including circuitry incorporating memory means for storing messages to be transmitted, microprocessor means for selecting the message to be transmitted, said circuitry processing the signal representing the message to be transmitted, and speaker means for transmitting of voice and data signals within said hertz range for reception by the said receiver means.

2. The invention of claim 1 and wherein said power supply comprising electrical power.

3. The invention of claim 1 and wherein said power supply comprising a battery power supply.

4. The invention of claim 1 and wherein said power supply comprising a solar power supply.

5. The invention of claims 2, 3, or 4 and wherein said receiver means processing both the voice signal and a data signal transmitted from the transmission means.

6. The invention of claim 5 and including band pass filter means for separating the processed voice signal from the data signal.

7. The invention of claim 6 and wherein said processed data signal is amplified, and said data signal provided for functioning of the microprocessor to regulate the audio output from the speaker of the receiver means.

8. The invention of claim 7 and wherein said microprocessor determines the language in which the message is broadcast from the speaker of the receiver means.

9. The invention of claim 7 and wherein said microprocessor determines the number of transmissions of the recorded message from the speaker of the receiver means.

10. The invention of claim 5 and wherein said transmission means and said receiver means having frequency shift means therein, said frequency shift means capable of shifting the data signal for obtaining digital data for further processing by the microprocessor.
